# EUROPÄISCHE PATENTSCHRIFT

(11) **EP 0 884 082 B1**
(45) Veröffentlichungstag und Bekanntmachung des Hinweises auf die Patenterteilung: **15.05.2002**
(21) Anmeldenummer: 97109624.3
(22) Anmeldetag: 13.06.1997
(51) Int. Cl.: B01D 19/00, F16N 39/00

(54) **Einrichtung zum Reinigen einer Hydraulikflüssigkeit**
Device for purifying a hydraulic liquid
Dispositif pour la purification d'un liquide hydraulique

(43) Veröffentlichungstag der Anmeldung: 16.12.1998
(73) Patentinhaber: Airbus Deutschland GmbH, 21129 Hamburg (DE)
(72) Erfinder: Halm, Jürgen, 27777 Ganterkesee II (DE); Mertens, Jochen, Ing. grad., 27211 Bassum (DE); Becher, Manfred, Ing. grad., 63303 Dreieich (DE)
(74) Vertreter: Hansmann, Dierk, Dipl.-Ing.

(56) Entgegenhaltungen:
- EP-A- 0 452 181
- DE-A- 2 715 444
- US-A- 4 432 775
- US-A- 4 604 109

## Beschreibung

Die Erfindung bezieht sich auf eine Einrichtung nach dem Oberbegriff des Anspruchs 1.

Die in den Hydrauliksystemen von Flugzeugen verwendeten Hydraulikflüssigkeiten neigen dazu, sich mit Schadstoffen, insbesondere Wasser und darin gelösten korrosiven Substanzen anzureichern, die zu Schäden, insbesondere Korrosionsschäden, an der betreffenden Hydraulikanlage führen können. Daher ist es erforderlich, daß die Hydraulikflüssigkeit, im folgenden kurz Öl genannt, in bestimmten Zeitabständen einer Reinigung von diesen Schadstoffen unterzogen oder erneuert wird. Hierzu werden stationäre Einrichtungen verwendet, die es erforderlich machen, daß das zu reinigende Öl dem jeweiligen System entnommen und nach erfolgter Reinigung wieder in das System eingebracht wird. Eine derartige Einrichtung ist der US-A- 4,604,109 zu entnehmen. Wesentliches Element dieser Einrichtung ist eine Schleuderscheiben-Anordnung, wodurch dem Öl das darin gelöste Wasser wieder entzogen wird, wobei zugleich schädliche Partikeln anhand geeigneter Filter aus dem Öl entfernt werden. Bei dieser Einrichtung erfolgt die Zufuhr der zu reinigenden Hydraulikflüssigkeit über eine zentrale Zuführung zu der Schleuderscheibe, wobei der obere Bereich des Schleuderscheibengehäuses mit einer Vakuumpumpe zum Absaugen von Wasserdampf in Verbindung steht und der untere Bereich des Schleuderscheibengehäuses ein Sammelbecken für gereinigte Hydraulikflüssigkeit bildet und die Einrichtung ferner einen Behälter für die zu reinigende und einen Behälter für die gereinigte Hydraulikflüssigkeit aufweist.
Um längere Bodenzeiten der Flugzeuge zu vermeiden, muß dabei immer eine entsprechende Menge von intaktem Öl zum Austausch bereitgehalten werden. Bei dieser Vorgehensweise verbleibt ein Teil des kontaminierten Öls in den Hydraulikzylindern des betreffenden Systems und kann daher nicht zur Reinigung erfaßt werden. Diese Vorgehensweise ist umständlich, da die erforderlichen Tätigkeiten nicht direkt am Flugzeug ausgeführt werden können.

Demgemäß liegt der Erfindung die Aufgabe zugrunde, eine gattungsgemäße Einrichtung derart auszubilden, daß damit eine Reinigung der Flüssigkeit vor Ort ermöglicht wird, wobei im Prinzip auch die in Hydraulikzylindern befindlichen Mengen erfaßt werden.

Diese Aufgabe wird bei einer gattungsgemäßen Einrichtung durch die kennzeichnenden Merkmale des Patentanspruchs 1 gelöst.

Dabei ist insbesondere von Vorteil, daß die Flüssigkeit im System des Flugzeugs gereinigt wird und die Bereitstellung einer Austauschmenge daher entfällt.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: ein hydraulisches Schaltbild einer Einrichtung zur Reinigung von Hydraulikflüssigkeit und
- Fig. 2: eine Außenansicht der Einrichtung.

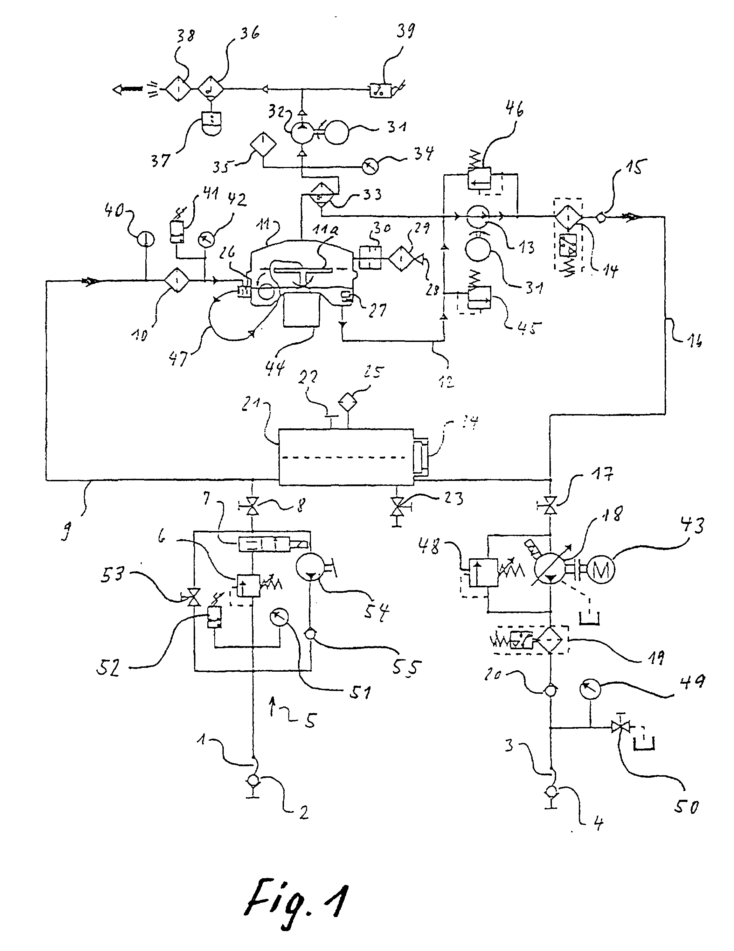

Figur 1 zeigt in einem Flußdiagramm eine Ausgestaltung der Einrichtung zur Reinigung von Hydraulikflüssigkeit mit deren wesentlichen Bestandteilen. Die Einrichtung wird mittels einer flexiblen Eintrittsleitung 1 mit einer Schnellkupplung 2 und einer flexiblen Austrittsleitung 3 mit einer Schnellkupplung 4 an das Hydrauliksystem eines Flugzeuges angeschlossen. Der interne Kreislauf umfaßt in Richtung des Pfeiles 5 im wesentlichen folgende Stationen; ein Druckhalteventil 6, ein Magnetventil 7, ein Eintritts-Absperrventil 8, eine interne Eintrittsleitung 9, ein Maschengitter 10, eine Schleuderscheiben-Anordnung 11, eine Zwischenleitung 12, eine Förderpumpe 13, ein Partikelfilter 14, ein Rückschlagventil 15, eine interne Austrittsleitung 16, ein Austritt-Absperrventil 17, eine Hochdruckpumpe 18, eine Austritts-Filteranordnung 19 und ein Austrittsventil 20, das seinerseits mit der flexiblen Austrittsleitung 3 verbunden ist. Die Einrichtung weist ferner einen sowohl mit der internen Eintrittsleitung 9 als auch mit der internen Austrittsleitung 16 verbundenen Behälter 21 mit einem Einfüllstutzen 22, einem Ablaßventil 23, einer Füllstandsanzeige 24 und einer Belüftung 25 auf. Der untere Bereich des Gehäuses der Schleuderscheiben-Anordnung 11 dient als Sammelbecken für das Öl und weist ein Schwimmerventil 26 und einen Niveau-Schalter 27 auf. Im oberen Bereich des Gehäuses der Schleuderscheiben-Anordnung 11 sammelt sich Luft, die über einen Einlaß 28, einen Einlaßfilter 29 und eine Blende 30 in das Gehäuse eintritt. Für das erforderliche Druckgefälle sorgt eine durch einen Motor 31 angetriebene Vakuumpumpe 32, die die Luft über einen Ölnebelabscheider 33 aus dem Gehäuse absaugt. In der gezeigten Ausgestaltung der Einrichtung dient der Motor 31 zugleich auch zum Antrieb der Pumpe 13, was durch die übereinstimmenden Bezugszeichen 31 ausgedrückt wird. An die den Ölnebelabscheider 33 mit der Vakuumpumpe 32 verbindende Leitung sind ein Unterdruckmesser 34 und ein Öler 35 angeschlossen. Die auf der Druckseite der Vakuumpumpe 32 austretende Luft durchströmt eine Austrittsfiltergruppe, bestehend aus einem Wasserabscheider 36 mit einem Sammelgefäß 37 und einem Austrittsfilter 38. Außerdem ist an der Druckseite der Vakuumpumpe 32 ein Druckschalter 39 angeschlossen. In Strömungsrichtung des Öls vor dem Maschengitter 10 ist ein Eingangstermometer 40 angeordnet. In Strömungsrichtung hinter dem Maschengitter 10 sind ein Unterdruckschalter 41 und ein Eingangsmanometer 42 angeschlossen.

Soll nun das im Hydrauliksystem eines Flugzeuges befindliche Öl anhand der Einrichtung gereinigt werden, so wird diese über die Schnellkupplungen 2 und 4 an das Hydrauliksystem des Flugzeuges angeschlossen und der Motor 31 für die Pumpen 13 und 32 ein Motor 43 für die Hochdruckpumpe 18 und ein Motor 44 für die Schleuderscheiben-Anordnung 11 in Bewegung gesetzt. Hierdurch wird einerseits aufgrund der Vakuumpumpe 32 eine annähernd konstante Menge an Öl aus dem Behälter 21 entnommen, über die Schleuderscheiben-Anordnung 11 geleitet und über die Leitung 16 wieder zurück in den Behälter 21 geführt. Andererseits wird aufgrund der Hochdruckpumpe 18 eine bestimmte Menge an Öl über die Schnellkupplung 4 in das Hydrauliksystem des Flugzeuges gepumpt, die über die Schnellkupplung 2 und das offene Absperrventil 8 wieder in den Behälter 21 zurückströmt. Damit werden vom Inhalt des Behälters 21 aus zwei Kreisläufe mit Öl versorgt, und zwar ein interner über die Schleuderscheiben-Anordnung 11 und ein externer über das Hydrauliksystem des Flugzeuges. Im internen Kreislauf erfolgt die Reinigung des Öls, wobei der Zufluß aus dem Behälter 21 zur Schleuderscheibenanordnung 11 durch den von der Vakuumpumpe 32 erzeugten Unterdruck erfolgt. Dabei wird die für die Schleuderscheibenanordnung 11 optimale Durchlaufgeschwindigkeit durch das Maschengitter 10 bestimmt. Die Zuflußmenge wird dabei durch das Schwimmerventil 26 derart in Abhängigkeit vom Ölspiegel geregelt, daß sein Abfall zum Öffnen und sein Anstieg zum Schließen des Ventils 26 führt. Der Niveauschalter 27 erfüllt eine Sicherheitsfunktion insofern, als er die Anlage abschaltet, falls aus irgend einem Grunde der Zufluß zur Schleuderscheiben-Anordnung 11 unterbrochen ist und deren unterer Gehäusebereich.durch die Vakuumpumpe 32 leergepumpt würde. Infolge der Schleuderscheibe 11a passiert das Öl den oberen Gehäusebereich der Schleuderscheiben-Anordnung 11 in Form feinster Tröpfchen, so daß das in dem Öl gelöste Wasser unter dem Einfluß des infolge der Vakuumpumpe 32 bestehenden Unterdrucks verdampft und über den Wasserabscheider 36 abgeführt werden kann. Das über den Partikelfilter 14 geführte Öl wird hier von schädlichen Partikeln befreit und gelangt über die Leitung 16 wieder zurück in den Behälter 21. Durch den beschriebenen internen Kreilauf wird dem Behälter 21 laufend kontaminiertes Öl entnommen und in Form von gereinigtem Öl wieder zugeführt. Hierdurch wird der Reinheitsgrad des im Behälter 21 befindlichen Öls mit zunehmender Betriebsdauer gesteigert. Über den Externen Kreislauf gelangt das gereinigte Öl in das Hydrauliksystem des Flugzeugs, wobei zugleich kontaminiertes Öl in den Behälter zurückströmt.

Parallel zur Hochdruckpumpe 18 ist ein Sicherheitsventil 48 geschaltet, wodurch der Druck auf der Druckseite der Pumpe 18 auf einen zulässigen Höchstwert begrenzt wird. Die Leistung der Hochdruckpumpe 18 reicht aus, um die flugzeugseitigen hydraulischen Organe wie Zylinder und Motore mit Betriebsdruck zu versorgen. Hierdurch können diese wie unter Betriebsbedingungen betätigt werden, was dazu führt, daß auch das in diesen Organen befindliche Öl während des Reinigungsprozesses ausgetauscht wird. Das flugzeugseitige Hydrauliksystem verfügt über ein Ölreservoir mit Druckspeicherwirkung, so daß stets ein vom Ölstand in diesem Reservoir abhängiger Vorspanndruck wirksam ist. Anhand eines Eingangsmanometers 49 kann der innerhalb des flugzeugseitigen Systems herrschende Öldruck auf der Hochdruckseite überwacht werden. Zur Entnahme von Öl aus dem externen Kreislauf ist ein Ablaßventil 50 vorgesehen. Das über die Schnellkupplung 4 in das flugzeugseitige Hydrauliksystem gepumpte Öl steht auf der Hochdruckseite unter einem Druck von ca. 200 bar und steht nach seiner Rückkehr über den Schnellverschluß 2 noch unter dem genannten Vorspanndruck. Um diesen gegenüber dem Betriebsdruck der Einrichtung von ca. 2 bar höheren Vorspanndruck während des Reinigungsprozesses aufrechtzuerhalten, ist das Druckhalteventil 6 vorgesehen. Der Druck des über die Schnellkupplung 2 ankommenden Öls kann anhand eines Auslaßmanometers 51 überwacht werden. Dieser Druck wirkt auch auf einen Druckschalter 52, der Bestandteil einer Sicherheitsschaltung ist. Ein Ablaßventil 53 ist zu dem Druckhalteventil 6 und dem Magnetventil 7 parallel geschaltet. Weiterhin ist zu dem Ablaßventil 53 eine Handpumpe 54 mit einem Rückschlagventil 55 parallel geschaltet. Mit Hilfe dieser Handpumpe 54 kann die innerhalb des flugzeugseitigen Systems befindliche Ölmenge aus dem Behälter 21 ergänzt werden. Umgekehrt kann ein flugzeugseitiger Öl-Überschuß mit Hilfe des Ablaßventils 53 durch Zurückströmen von Öl in den Behälter 21 durch die Wirkung des Vorspanndrucks abgebaut werden. Wenn die Vom Behälter 21 aufzunehmende Ölmenge dessen Fassungsvermögen übersteigen sollte, kann das überschüssige Öl über das Ablaßventil 50 abgelassen werden.

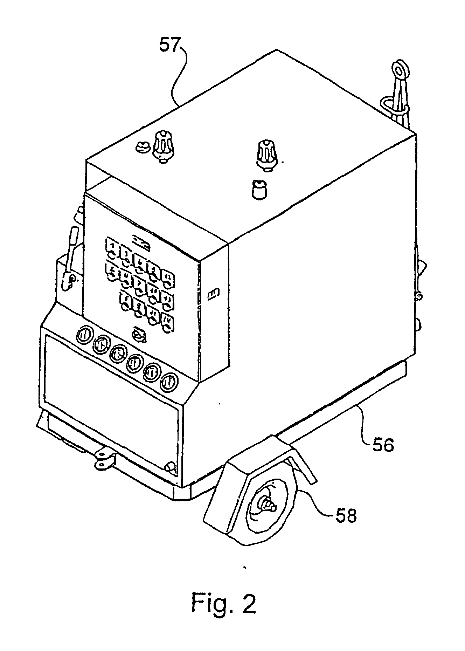

Figur 2 zeigt eine Ansicht der Einrichtung mit einem Unterbau 56 und einem Aufbau 57, wobei der Unterbau mit zwei Rädern 58 versehen ist und der Aufbau 57 die Funktionaeinheiten gemäß Fig.1 umschließt. Das Bild zeigt alle Bedienungs- und Überwachungselemente, die für den Betrieb der Einrichtung erforderlich sind.

## Patentansprüche

1. Einrichtung zum Reinigen einer Hydraulikflüssigkeit mit einer Schleuderscheiben-Anordnung mit mindestens einer Schleuderscheibe, wobei eine zentrale Zuführung für die zu reinigende Hydraulikflüssigkeit zu der Schleuderscheibe angeordnet ist und der obere Bereich des Schleuderscheibengehäuses mit einer Vakuumpumpe zum Absaugen von Wasserdampf über einen Ölnebelabscheider zum Abscheiden von Hydraulikflüssigkeit in Verbindung steht, wobei die abgeschiedene Hydraulikflüssigkeit durch eine Pumpe abgepumpt wird, und der untere Bereich des Schleuderscheibengehäuses ein Sammelbecken für gereinigte Hydraulikflüssigkeit bildet,
**dadurch gekennzeichnet, daß** die zu reinigende und die gereinigte Hydraulikflüssigkeit in einem Behälter (21) zusammengefaßt wird, der über eine flexible Eintrittsleitung (1) und eine flexible Austrittsleitung (3) mittels hydraulischer Schnellkupplungen (2,4) an ein flugzeugseitiges Hydrauliksystem anschließbar ist, wobei zur Förderung der Hydraulikflüssigkeit in das flugzeugseitige Hydrauliksystem eine Hochdruckpumpe (18) vorgesehen ist und in den Rückfluß der Hydraulikflüssigkeit ein Druckhalteventil (6) eingeschaltet ist und die Einrichtung eine mittels Rädern verfahrbare Einheit bildet.

2. Einrichtung nach Anspruch 1,
**dadurch gekennzeichnet, daß** zum Regulieren des flugzeugseitigen Füllstandes der Hydraulikflüssigkeit eine Handpumpe (54) mit einem Rückschlagventil (55) und zum Ablassen von Hydraulikflüssigkeit aus dem Flugzeug ein Ablaßventil (53) vorgesehen ist.

3. Einrichtung nach Anspruch 1 oder 2,
**dadurch gekennzeichnet, daß** der obere Bereich des Schleuderscheibengehäuses über eine Blende (30) und einen Einlaßfilter (29) mit einem Einlaß (28) verbunden ist.

4. Einrichtung nach einem der Ansprüche 1 bis 3,
**dadurch gekennzeichnet, daß** die Vakuumpumpe (32) zur Förderung der zu reinigenden Hydraulikflüssigkeit herangezogen wird.

5. Einrichtung nach einem der Ansprüche 1 bis 4,
**dadurch gekennzeichnet, daß** die Vakuumpumpe (32) zur Förderung der zu reinigenden Hydraulikflüssigkeit und die Pumpe (13) zum Abpumpen der vom Ölnebelabscheider (33) abgeschiedenen Hydraulikflüssigkeit gemeinsam durch einen Motor (31) angetrieben werden.

6. Einrichtung nach einem der Ansprüche 1 bis 5,
**gekennzeichnet durch** einen Unterbau (56) und einen Aufbau (57), wobei der Unterbau mit zwei Rädern (58) versehen ist und der Aufbau (57) alle zum Betrieb der Einrichtung erforderlichen Funktionaeinheiten sowie Bedienungs- und Überwachungselemente aufweist.

## Claims

1. Device for purifying a hydraulic fluid, with a centrifugal disc arrangement with at least one centrifugal disc, wherein there is arranged a central feed for feeding the hydraulic fluid to be purified to the said centrifugal disc, and the upper region of the centrifugal disc housing is in communication with a vacuum pump for extracting water vapour, via an oil mist separator for separating off hydraulic fluid, wherein the hydraulic fluid separated off is pumped off by a pump, and the lower region of the centrifugal disc housing forms a collecting basin for purified hydraulic fluid,
**characterised in that** the hydraulic fluid to be purified and the purified hydraulic fluid are combined in a receptacle (21) which can be connected to a hydraulic system on an aircraft via a flexible entry line (1) and a flexible exit line (3) by means of quick-action hydraulic couplings (2, 4), wherein, for conveying the hydraulic fluid into the hydraulic system on the aircraft, a high-pressure pump (18) is provided and a pressure-maintaining valve (6) is interpolated in the return flow of the hydraulic fluid and the device forms a unit which is movable by means of wheels.

2. Device according to claim 1,
**characterised in that** a hand pump (54) with a non-return valve (55) is provided for regulating the level of the hydraulic fluid on the aircraft and an outlet valve (53) is provided for discharging hydraulic fluid from the aircraft.

3. Device according to claim 1 or 2,
**characterised in that** the upper region of the centrifugal disc housing is connected to an inlet (28) via a shutter (30) and an inlet filter (29).

4. Device according to one of claims 1 to 3,
**characterised in that** the vacuum pump (32) is employed for conveying the hydraulic fluid to be purified.

5. Device according to one of claims 1 to 4,
**characterised in that** the vacuum pump (32) for conveying the hydraulic fluid to be purified and the pump (13) for pumping off the hydraulic fluid separated off by the oil mist separator (33) are jointly driven by a motor (31).

6. Device according to one of claims 1 to 5,
**characterised by** a substructure (56) and a superstructure (57), wherein the substructure is provided with two wheels (58) and the superstructure (57) has all the functional units required for operating the device, as well as control and monitoring elements.

## Revendications

1. Dispositif pour la purification d'un liquide hydraulique avec un montage à disques centrifuges comprenant au moins un disque centrifuge, une amenée centrale vers le disque centrifuge, destinée au liquide hydraulique à purifier étant prévue, la section supérieure du boîtier du disque centrifuge étant reliée à une pompe à vide destinée à aspirer la vapeur d'eau par l'intermédiaire d'un brouillard d'huile destiné, lui, à extraire le liquide hydraulique, le liquide hydraulique une fois extrait étant aspiré par une pompe, et la section inférieure du boîtier du disque centrifuge formant un bassin de retenue du liquide hydraulique purifié,
et **caractérisé en ce que** le liquide hydraulique à purifier et le liquide hydraulique purifié sont rassemblés dans un récipient (21) raccordable à un système hydraulique situé du côté avion, à l'aide de raccordements rapides (2,4), et par l'intermédiaire d'une canalisation d'entrée (1) flexible et d'une canalisation de sortie (2) flexible, une pompe à haute pression (18) étant prévue pour acheminer le liquide hydraulique vers le système hydraulique situé du côté avion, une soupape de maintien de la pression (6) étant intégrée au refluement du liquide hydraulique et le dispositif formant une unité déplaçable au moyen de roues.

2. Dispositif selon la revendication 1, **caractérisé en ce qu'**une pompe manuelle (54) avec soupape de retenue (55) est prévue afin de réguler le niveau de remplissage du liquide hydraulique côté avion, le liquide hydraulique étant libéré de l'avion par une soupape d'échappement (53).

3. Dispositif selon la revendication 1 ou 2,
**caractérisé en ce que** la section supérieure du boîtier du disque centrifuge est reliée à une arrivée (28), par l'intermédiaire d'un obturateur (30) et d'un filtre d'admission (29).

4. Dispositif selon une des revendications 1 à 3,
**caractérisé en ce que** la pompe à vide (32) est installée afin d'extraire le liquide hydraulique à purifier.

5. Dispositif selon une des revendications 1 à 4,
**caractérisé en ce que** la pompe à air (32) destinée à extraire le liquide hydraulique à purifier et la pompe (13) destinée à aspirer le liquide hydraulique extrait par le séparateur à vapeur d'huile (33) sont actionnées simultanément par un moteur (31).

6. Dispositif selon une des revendications 1 à 5,
**caractérisé par** une infrastructure (56) et une superstructure (57), l'infrastructure étant dotée de deux roues (58) et la superstructure (57) disposant de toutes les unités fonctionnelles nécessaires au fonctionnement du dispositif, sans oublier des éléments de commande et de contrôle.
